# EUROPEAN PATENT SPECIFICATION

(11) **EP 4 500 487 B1**
(45) Date of publication and mention of the grant of the patent: **08.04.2026**
(21) Application number: 23731876.1
(22) Date of filing: 19.05.2023
(51) Int. Cl.: G06V 10/82, G06V 20/00, G06N 3/0455, G06N 3/0464, G06N 3/084, G06N 3/096, G06F 18/21, G06V 10/778

(54) **PERFORMING COMPUTER VISION TASKS USING GUIDING CODE SEQUENCES**
DURCHFÜHRUNG VON COMPUTERSICHTAUFGABEN UNTER VERWENDUNG VON FÜHRUNGSCODESEQUENZEN
RÉALISATION DE TÂCHES DE VISION PAR ORDINATEUR À L'AIDE DE SÉQUENCES DE CODE GUIDE

(30) Priority: 19.05.2022 US 202263344035 P
(43) Date of publication of application: 05.02.2025
(73) Proprietor: Google LLC, Mountain View, CA 94043 (US)
(72) Inventor: KOLESNIKOV, Alexander, 8002 Zürich (CH); SUSANO PINTO, André, 8002 Zürich (CH); HARMSEN, Jeremiah Joseph, 8002 Zürich (CH); BEYER, Lucas Klaus, 8002 Zürich (CH); HOULSBY, Neil Matthew Tinmouth, 8002 Zürich (CH); ZHAI, Xiaohua, 8002 Zürich (CH)
(74) Representative: Varley, James Richard
(86) International application number: PCT/US2023/022964
(87) International publication number: WO 2023/225340

(56) References cited:
- WEI YIN ET AL: "The devil is in the labels: Semantic segmentation from sentences", ARXIV.ORG, CORNELL UNIVERSITY LIBRARY, 201 OLIN LIBRARY CORNELL UNIVERSITY ITHACA, NY 14853, 4 February 2022 (2022-02-04), XP091150131
- DOSOVITSKIY DOSOVITSKIY ALEXEY ALEXEY ET AL: "An image is worth 16x16 words: transformers for image recognition at scale", 3 June 2021 (2021-06-03), pages 1 - 22, XP093050792, Retrieved from the Internet <URL:https://arxiv.org/pdf/2010.11929.pdf> [retrieved on 20230531], DOI: 10.48550/arXiv.2010.11929
- ALEXANDER KOLESNIKOV ET AL: "UViM: A Unified Modeling Approach for Vision with Learned Guiding Codes", ARXIV.ORG, CORNELL UNIVERSITY LIBRARY, 201 OLIN LIBRARY CORNELL UNIVERSITY ITHACA, NY 14853, 20 May 2022 (2022-05-20), XP091230297

## Description

### BACKGROUND

This specification relates to processing inputs using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., another hidden layer or the output layer. Each layer of the network generates an output from a received input in accordance with current values of a respective set of parameters.

"The devil is in the labels: Semantic segmentation from sentences" (W. Lin et al., arXiv:2202.02002, Feb. 2022) discloses an approach to semantic segmentation that achieves state-of-the-art supervised performance when applied in a zero-shot setting. It thus achieves results equivalent to those of the supervised methods, on each of the major semantic segmentation datasets, without training on those datasets. This is achieved by replacing each class label with a vector-valued embedding of a short paragraph that describes the class.

"An Image is Worth 16x16 Words: Transformers for Image Recognition at Scale" (A. Dosovitskiy et al., arXiv:2010.11929, Oct. 2020) discloses a pure transformer applied directly to sequences of image patches that can perform image classification tasks.

### SUMMARY

The invention is defined in the appended claims.

This specification describes a system implemented as computer programs on one or more computers in one or more locations that performs a computer vision task on an input image. A computer vision task is a task that requires processing one or more input images, i.e., processing the intensity values of the pixels of the one or more images, to generate a prediction that characterizes the one or more images. Examples of computer vision tasks that the system can perform are described below.

The subject matter described in this specification can be implemented in particular embodiments so as to realize one or more of the following advantages.

Using the described techniques, the same model architecture can be adapted (through training) for multiple different computer vision tasks. This eliminates the need for computationally expensive task-specific architecture hyperparameter tuning. Moreover, using these techniques, a base computer vision neural network can obtain a high-level guiding code sequence and use the sequence as a "guide" for generating a high quality output even for tasks that require high-dimensional structured predictions. Thus, the base computer vision neural network can have a significantly simpler and more computationally efficient architecture than other high-performing architectures for such tasks.

In other words, the described techniques use guiding code sequences as an additional input to a base computer vision neural network, i.e., in addition to the input image. By making use of these guiding code sequences, the base computer vision neural network can perform significantly better on the computer vision task than the network could by processing only the input, even though the guiding code sequences have a significantly lower dimensionality than the input image.

For example, training a model to accurately generate outputs in a structured output space for a task that requires high-dimensional structured outputs, e.g., outputs that include one or more predicted values for each pixel in the input image, is difficult, because the model has to model complex interactions within the output space. By making use of guiding code sequences, this burden can be alleviated and the model can achieve significant performance gains. In particular, given both the input image and the guiding code sequence, the elements of the output can have fewer dependencies, i.e., rather than if only the input image was provided, and can be modelled well by the base model.

As one example, it has been found that a default base computer vision neural network, e.g., having an architecture based on a Vision Transformer model, e.g., a ViT-L model, trained without guiding code sequences (i.e., so that it processes only the input image) achieves significantly worse results than a smaller base computer vision neural network, e.g., one that uses a ViT model that is 30% smaller than the ViT-L model, that is trained and deployed with guiding code sequences as described in this specification on a panoptic segmentation task. As a specific example, when trained on the CoCO panoptic 2017 dataset, the base model without guiding codes achieves a panoptic quality (PQ) of 19.6, while the 30% smaller model that uses guiding codes achieves a panoptic quality (PQ) of 43.7, significantly improving performance even though the same loss function was used for training both models and despite the smaller size of the model that uses guiding codes. Similar results have been found for other computer vision tasks, e.g., colorization, depth estimation, and so on.

The details of one or more embodiments of the subject matter of this specification are set forth in the accompanying drawings and the description below.

Other features, aspects, and advantages of the subject matter will become apparent from the description, the drawings, and the claims.

### BRIEF DESCRIPTION OF THE DRAWINGS

FIG. 1 is a diagram of an example computer vision system.
FIG. 2 is a flow diagram of an example process for generating a network output for a computer vision task.
FIG. 3 is an example that shows the operation of the system during training and at inference.
FIG. 4 is a flow diagram of an example process for training the sequence transduction neural network.

Like reference numbers and designations in the various drawings indicate like elements.

### DETAILED DESCRIPTION

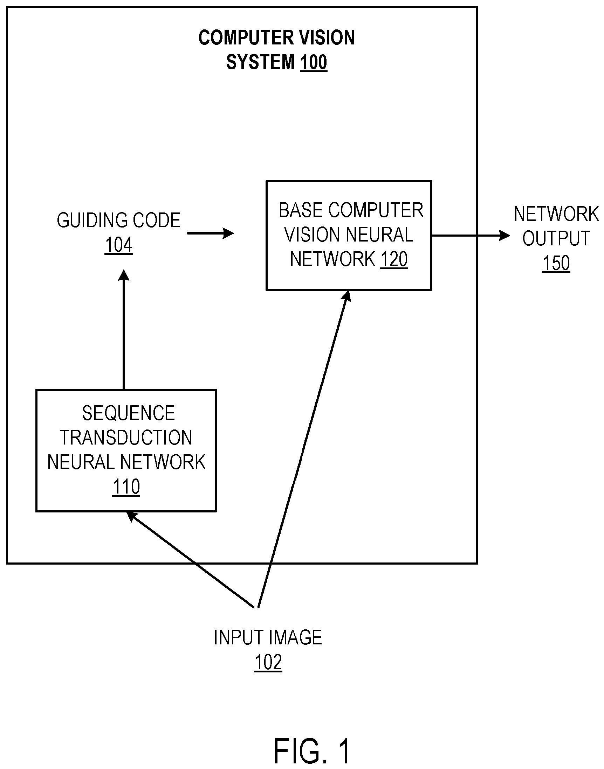

FIG. 1 is a diagram of an example computer vision system 100. The computer vision system 100 is an example of a system implemented as computer programs on one or more computers in one or more locations, in which the systems, components, and techniques described below can be implemented.

The computer vision system 100 is a system that receives an input image 102 and performs a computer vision task on the image 102 to generate a network output 150 for the computer vision task.

The computer vision task can generally be any appropriate computer vision task. That is, the task can be any task that requires processing an image, i.e., processing the intensity values of the pixels of the image, to predict an output for the image.

As a particular example, the computer vision task can be a task that requires producing high-dimensional structured outputs, e.g., producing outputs that require making a prediction for multiple different pixels of the image. More specifically, the task can be a structured output task that requires making a prediction that includes one or more values for every pixel of the image.

For example, the task can be one of: instance segmentation, where the output assigns a respective instance label to each pixel in the image that identifies which object instance, if any, the pixel depicts; semantic segmentation, where the output assigns a respective class label to each pixel in the input image that identifies the object class to which the pixel belongs; panoptic segmentation, where the output identifies a class label and an instance label for each pixel; monocular depth estimation, where the output identifies a respective depth value for each pixel in the input image; surface normal estimation, where the output identifies a respective surface orientation for each pixel; image colorization, where the input is a greyscale image and the output is a colorized image, e.g., an RGB image; object detection, where the output identifies positions and, optionally, object classes of one or more objects in the image; or image super-resolution, where the output is an image that has a higher resolution than the input image.

To perform the computer vision task on the input image 102, the system 100 processes the input image 102 through a sequence transduction neural network 110.

The sequence transduction neural network 110 is a neural network that is configured to process the input image 102 to generate a guiding code sequence 104 that includes a fixed number of vectors.

In particular, the guiding code sequence 104 includes a fixed number of vectors, with each vector being selected from a discrete vocabulary of vectors, i.e., a vocabulary that includes a finite, fixed number of vectors. For example, the discrete vocabulary can include between five hundred and twenty thousand vectors, e.g., 1024, 4096, or 16384 vectors.

The sequence transduction neural network 110 can have any appropriate architecture that allows the neural network 110 to map an input image to a sequence of vectors.

As a particular example, the sequence transduction neural network 110 can include an encoder neural network configured to process the input image 102 to generate an encoded representation of the input image 102 and an auto-regressive decoder neural network configured to auto-regressively generate an output sequence that specifies the guiding code sequence 104 conditioned on the encoded representation of the input image 102.

Generally, the sequence transduction neural network 110 is configured to generate the output sequence across multiple time steps.

At each time step, the neural network 110 is configured to generate a score distribution over the vectors in the vocabulary conditioned on (i) the input image and (ii) the vectors at any earlier time steps in the output sequence.

Thus, at each time step during the generation of the output sequence, the system 100 selects the respective vector at the time step in the output sequence using the respective score distribution generated by the sequence transduction neural network 110 for the time step.

As one example, the system 100 can greedily select the highest scoring token.

As another example, the system 100 can select the respective token by sampling a token in accordance with the score distribution. As a particular example, the system can sample a token in accordance with the score distribution using nucleus sampling.

As a particular example, the sequence transduction neural network 110 can include an encoder neural network and a decoder neural network.

The encoder neural network can be configured to process the input image 102 to generate an encoded representation of the input image 102. The encoded representation is a sequence that includes a plurality of encoded vectors that collectively represents the input image 102.

The encoder neural network 120 can be any appropriate image encoder neural network that receives the intensity values of the pixels of the image 102 and encodes them into hidden representations. Examples of such encoders include convolutional neural networks, Transformer neural network, or neural networks that include both convolutional layers and self-attention layers. An example of a convolutional neural network that can be used as the encoder is described in Kaiming He, Xiangyu Zhang, Shaoqing Ren, and Jian Sun. Deep residual learning for image recognition. In Proceedings of the IEEE Conference on Computer Vision and Pattern Recognition, pp. 770-778, 2016. An example of a Transformer neural network that can be used as the encoder is described in Alexey Dosovitskiy, Lucas Beyer, Alexander Kolesnikov, Dirk Weissenbom, Xiaohua Zhai, Thomas Unterthiner, Mostafa Dehghani, Matthias Minderer, Georg Heigold, Sylvain Gelly, et al. An image is worth 16x16 words: Transformers for image recognition at scale. In Intemational Conference on Learning Representations, 2020. An example of a neural network that includes both convolutional layers and self-attention layers that can be used as the encoder is described in Nicolas Carion, Francisco Massa, Gabriel Synnaeve, Nicolas Usunier, Alexander Kirillov, and Sergey Zagoruyko. End-to-end object detection with transformers. In European Conference on Computer Vision, pp. 213-229. Springer, 2020.

When the last layer of the encoder is a convolutional layer that generates a feature map, the system 100 can generate the encoded representation by flattening the feature map into a sequence of vectors. When the last layer of the encoder is an attention layer, the system 100 can directly use the outputs of the attention layer as the encoded representation.

The decoder neural network is configured to process the encoded representation of the input image 102 to generate the output sequence.

In particular, the decoder can be an auto-regressive decoder neural network that, at each time step, processes data specifying the vectors at any earlier time steps in the output sequence while conditioned on the encoded representation of the input image 102 to generate a respective score distribution for the time step. The score distribution includes a respective score, e.g., a probability or a logit, for each vector in the vocabulary.

As a particular example, the decoder can be an auto-regressive Transformer decoder that applies causal self-attention over the already generated vectors and cross-attention into the encoded representation 122. That is, the decoder 130 can include both self-attention layers that apply causal self-attention over representations of the already generated vectors and cross-attention layers that cross-attend into the encoded representation 122.

Examples of such Transformer decoders that can be used as the decoder are described in Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv:1910.10683, 2019 and Alec Radford, Karthik Narasimhan, Tim Salimans, and Ilya Sutskever. Improving language understanding by generative pre-training. 2018.

The system provides the guiding code sequence 104 as input to a base computer vision neural network 120 that is configured to process the guiding code sequence 104 and the input image 102 to generate the network output 150 for the computer vision task. Thus, rather than having to directly predict the network output 150 from the input image 102, the base computer vision neural network 120 is also "guided" by the guiding code sequence 104.

The base computer vision neural network 120 can have any appropriate architecture that allows the neural network 120 to map an image to an output for the computer vision task.

For example, the neural network 120 can be a feedforward neural network 120 that generates the entire network output 150 in single forward pass. For example, the neural network can be a vision Transformer neural network or a convolutional neural network that is configured to process the input image and to process the code sequence as an additional input.

The base computer vision neural network 120 can be adapted to also receive the guiding code sequence 104 in addition to the input image 102. For example, when the neural network 120 is a vision Transformer, the guiding code sequence 104 can be prepended to or appended to the sequence of tokens that represents the patches of the image that is processed by the self-attention layers of the vision Transformer. As another example, when the neural network 120 is a convolutional neural network, the guiding code sequence 104 can be broadcasted to generate additional channels that have the same resolution as the input image and depth concatenated with the input image to generate the input to the neural network 120.

Generally, the guiding code sequence 104 includes a relatively small number of vectors (and, therefore, a relatively small number of total values) relative to the number of values that are in the network output 150.

For example, generating the guiding code sequence 104 can require generating one hundred times fewer values than generating the network output for the computer vision task.

In particular, because each vector in the guiding code sequence 104 is from the discrete vocabulary, generating the guiding code sequence 104 only requires selecting one of the vectors from the vocabulary at each position in the sequence. Thus, when the sequence includes 256 vectors, generating the guiding code sequence 104 only requires selecting 256 values.

On the other hand, as described above, the network output 150 can be a structured output that includes one or more predicted values for each of a plurality of pixels in the output image. Thus, for a 512 x 512 image, this requires predicting over 260,000 values.

By restricting the vectors in the guiding code sequence 104 to be selected from the vocabulary, e.g., rather than allowing each element of each vector to take any value from a continuous space, the system 100 allows the sequence transduction 110 to be effectively trained to generate sequences that will assist the base computer visional neural network 120 in generating accurate network outputs 150. That is, because the vocabulary is discrete, the sequence transduction neural network 110 only needs to select a useful sequence from a discrete set, which is a significantly easier task than generating a useful sequence from a continuous space of possibilities. Training the neural network 110 will be described in more detail below.

Training a model to accurately generate outputs in this structured output space is difficult, because the model has to model complex interactions within the output space. In particular, given both the input image and the guiding code sequence, the elements of the output can have fewer dependencies, i.e., rather than if only the input image was provided, and can be modelled well by the base model.

As an illustrative example, consider colorization: given a grayscale image of a car, the pixel colors are highly dependent (most cars are of uniform color). However, given a guiding code with the information "the car is red", such cross-pixel dependencies cease to exist.

The outputs generated by the system 100 can be used in any of a variety of ways.

As a particular example, the system 100 can be part of a perception system embedded within an agent, e.g., a robot or an autonomous vehicle, that processes images and optionally other sensor data collected by sensors of the agent and the network output can be used by the perception system or other software on-board the agent to control the agent as the agent navigates through the environment.

As another particular example, the system 100 can be part of a perception system embedded within or in communication with a different type of device that processes sensor data, e.g., a camera monitoring system, a mobile phone, and so on. The network outputs generated by the system 100 can be used as part of a pre-processing stage before images are displayed to a user or can be used to automatically trigger other actions.

As yet another particular example, client devices can interact with the system 100 through an application programming inference (API), e.g., a web-based API. In particular, client devices can submit an API call that includes or identifies an image to be analyzed and the system 100 can provide, in response, data identifying the network output. For example, the system 100 can format the network output in a specified format, e.g., as a JavaScript Object Notation (JSON) file or as a file in another type of data-interchange format, and provide the file in response to the API call.

Prior to using the neural network 110 and the neural network 120 to perform the task, the system 100 or another training system trains the neural network 110 and the neural network 120 on training data that includes multiple training examples.

Each training example includes an input training image and a ground truth output for the computer vision task, i.e., the ground truth output that should be generated by performing the computer vision task on the input training image in the training example.

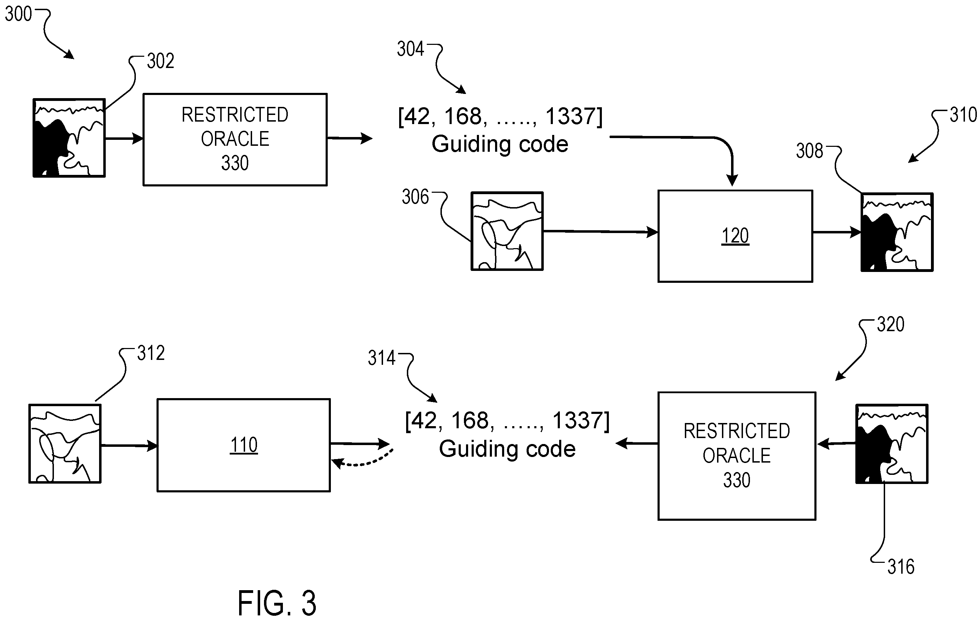

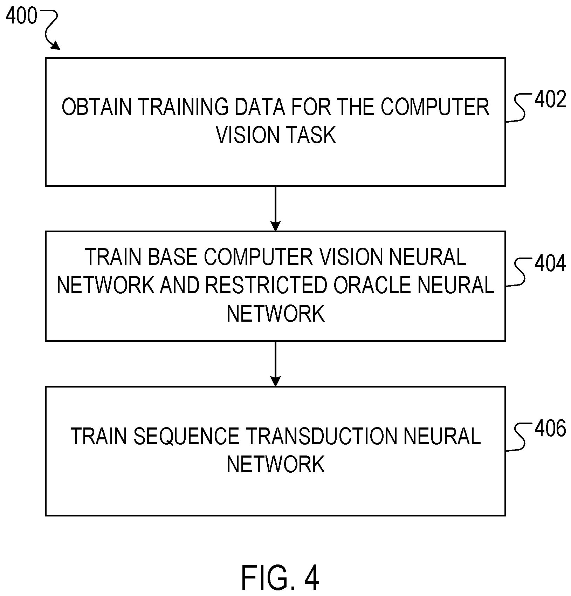

Training the neural networks 110 and 120 will be described in more detail below with reference to FIGS. 3 and 4.

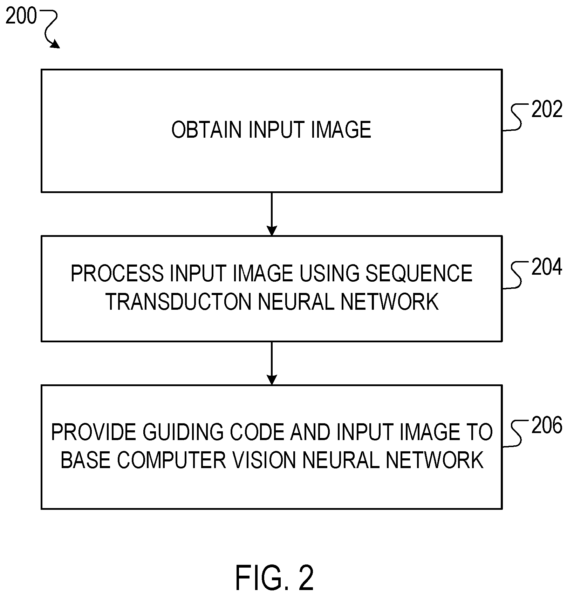

FIG. 2 is a flow diagram of an example process 200 for generating a network output for an input image. For convenience, the process 200 will be described as being performed by a system of one or more computers located in one or more locations. For example, a computer vision system, e.g., the computer vision system 100 depicted in FIG. 1, appropriately programmed in accordance with this specification, can perform the process 200.

The system obtains an input image (step 202).

The system processes the input image through a sequence transduction neural network that is configured to process the input image to generate a guiding code sequence that includes a fixed number of vectors (step 204).

The system provides the guiding code sequence as input to a base computer vision neural network that is configured to process the guiding code sequence and the input image to generate a network output for the computer vision task (step 206).

FIG. 3 is an example 300 that shows the operation of the system 100 during training and at inference.

In particular, FIG. 3 shows a diagram 310 of the training of the base computer vision neural network 120.

As shown in FIG. 3, during the training, the system makes use of a restricted oracle neural network 330.

The restricted oracle neural network 330 is a neural network that is configured to process a ground truth output 302 for the computer vision task to generate a training guiding code sequence 304 for a corresponding training image 306. That is, instead of processing an input image, the restricted oracle neural network 330 processes a known ground truth output for that image to generate the training guiding code sequence.

To generate a training guiding code sequence from a ground truth output, the restricted oracle neural network 330 is configured to map the ground truth output for the computer vision task to a sequence of encoded vectors, e.g., that are from a continuous space and are not constrained to be discrete, and generate the training guiding code sequence by mapping each encoded vector to a nearest vector in the discrete vocabulary of vectors.

The restricted oracle neural network 330 can have any appropriate architecture that allows the neural network 330 to map ground truth outputs for the computer vision task to a sequence of encoded vectors.

For example, the restricted oracle neural network 330 can be a vision Transformer neural network or a convolutional neural network that represents the ground truth output as an image, with the channels of the image being the respective ground truth values for the pixels of the corresponding input image that are included in the ground truth output.

The restricted oracle neural network 330 is referred to as an "oracle" neural network because it has access to the ground truth output (and therefore cannot be used at inference time to make predictions, since no ground truth is available).

The oracle neural network is referred to as "restricted" because, while it has access to the ground truth output, it needs to compactly represent the information in the ground truth that will be useful to the base neural network in accurately reconstructing the ground truth in the image. That is, due to the fact that the guiding code is relatively small and discrete, the restricted oracle neural network cannot encode all of the information in the high-dimensional ground truth output in the guiding code and needs to "distill" the relevant information into the smaller guiding code.

As shown in FIG. 3, the system trains the restricted oracle neural network 330 jointly with the base computer vision neural network 120. During this joint training, and, unlike during inference, the base computer vision neural network 120 receives as input (i) a training image 306 and (ii) a training guiding code sequence 304 for the training image 306 generated by the restricted oracle neural network 330, i.e., instead of a guiding code sequence generated by the sequence transduction neural network 110 (which does not have access to any ground truth outputs and only has access to the input image), that is generated by processing the corresponding ground truth output 302. The base computer vision neural network 120 processes this input to generate a predicted output 308. The system then uses the ground truth output 302 and the predicted output 308 to compute a loss for the training.

Thus, during this training, the system trains the base computer visional neural network 120 to perform the computer vision task well given guiding code sequences 304 that are derived from ground truth outputs 302.

After this training, because the ground truth outputs 302 are not available for new images received at inference, the system trains the sequence transduction neural network 110 to generate guiding code sequences using the trained restricted oracle neural network 330.

In particular, the system trains the sequence transduction neural network 110 so that each guiding code sequence 314 generated by the sequence transduction neural network 110 by processing a given input image 312 is a prediction of a sequence that would be generated by the (trained) restricted oracle neural network 330 by processing a ground truth label for the computer vision task for the given input image 312. That is, although the sequence transduction neural network 110 does not have access to the ground truth output, the sequence transduction neural network 110 predicts the sequence that would have been generated by the restricted oracle neural network 330 by processing the ground truth output.

Training is described in more detail below with reference to FIG. 4.

In particular, FIG. 3 also shows a diagram 320 of performing inference.

At inference, when a new image 312 is received, the system processes the new image 312 using the sequence transduction neural network 110 to generate a guiding code sequence 314 for the new image 312. The system then processes the guiding code sequence 314 and the new image 312 using the base computer vision neural network 120 to generate a network output 316 for the computer vision task. That is, although the ground truth output for the new image 312 is not available, the system is still able to generate a high quality network output 316 by "guiding" the base computer vision neural network 120 using the guiding code sequence 314 (that is a prediction of a sequence that would have been generated by processing the ground truth output).

FIG. 4 is a flow diagram of an example process 400 for training the sequence transduction neural network, the restricted oracle neural network, and the base computer vision neural network. For convenience, the process 400 will be described as being performed by a system of one or more computers located in one or more locations. For example, a training system, e.g., the computer vision system 100 depicted in FIG. 1 or a different system of one or more computers in one or more locations, appropriately programmed in accordance with this specification, can perform the process 400.

The system obtains a set of first training data for the computer vision task (step 402). The first training data includes a plurality of training images and, for each training image, a ground truth output for the computer vision task.

The system trains the base computer vision neural network jointly with the restricted oracle neural network on the first training data (step 404).

As described above, the restricted oracle neural network is configured to process a ground truth output for the computer vision task to generate a training guiding code sequence for the corresponding training image.

During the training and, unlike during inference, the base computer vision neural network receives as input (i) a training image and (ii) a training guiding code sequence for the training image generated by the restricted oracle neural network, i.e., instead of a guiding code sequence generated by the sequence transduction neural network (which does not have access to any ground truth outputs and only has access to the input image).

That is, during the training, for each training example, the system processes the ground truth output in the training example using the restricted oracle neural network to generate a training guiding code sequence for the training image.

The system then processes the training image and the training guiding code sequence using the base computer vision neural network to generate a predicted output for the task.

The system therefore can train the base computer vision neural network and the restricted oracle neural network jointly on a loss function for the computer vision task that measures the quality of the predicted outputs (generated by the base computer vision neural network) relative to the corresponding ground truth outputs. The loss function can be any appropriate loss function for the computer vision task, e.g., pixel-wise cross-entropy or pixel-wise mean squared error.

As described above, the guiding code sequence includes a sequence of vectors that are each selected from a discrete vocabulary of vectors.

To generate a guiding code sequence from a ground truth output, the restricted oracle neural network is configured to map the ground truth output for the computer vision task to a sequence of encoded vectors, e.g., that are from a continuous space and are not constrained to be discrete, and generate the training guiding code sequence by mapping each encoded vector to a nearest vector in the discrete vocabulary of vectors.

Thus, to train the restricted oracle network jointly with the computer vision neural network the system needs to backpropagate gradients through the computer vision neural network into the restricted oracle network jointly. However, the mapping of the encoded vector to the nearest vector in the discrete vocabulary is not differentiable. Instead, the system can, for each encoded vector, set the gradient with respect to the encoded vector to be equal to the gradient with respect to the nearest vector, in order to backpropagate the gradients into the restricted oracle neural network.

In some implementations, the system also learns the discrete vocabulary of vectors jointly with the training of the restricted oracle neural and the base computer vision neural network. For example, the system can keep total number of vectors in the discrete vocabulary fixed and then learn the vectors in the vocabulary using a VQ-VAE loss. VQ-VAE losses that can be used to learn vocabularies of discrete vectors are described in A. van den Oord, O. Vinyals, and K. Kavukcuoglu. Neural discrete representation learning. In Advances in Neural Information Processing Systems, 2017.

In some of these implementations, the system can discard unused vectors from the vocabulary during the training.

For example, the system can, at a given point during the training, detect an unused vector in the discrete vocabulary. The system can determine that a vector is "unused" when it has not been selected as the nearest vector more than *k* times in the *n* most recent training steps, where *k* and *n* are respective threshold values that are received as input by the system.

In response to detecting an unused vector, the system can identify a most frequently used vector in the discrete vocabulary and generate a new vector by applying noise, e.g., adding noise sampled from a noise distribution, to the most frequently used vector. The system can then replace the unused vector with the new vector, thereby keeping the number of vectors constant but replacing a vector that is unlikely to be used with one that is likely to be selected.

The system can perform the training iteratively on batches of the first training data by making use of an appropriate optimizer, e.g., the Adam optimizer, the rmsProp optimizer, the Adafactor optimizer, or a different machine learning optimizer, to map gradients of the loss function to updates to the values of the parameters of the base computer vision neural network jointly and the restricted oracle neural network.

After training the base computer vision neural network jointly with the restricted oracle neural network, the system trains the sequence transduction neural network on second training data that includes a plurality of training examples (step 406).

Each training example in the second training data includes (i) a training image and (ii) a ground truth guiding code sequence generated by processing a ground truth output for the computer vision task for the training image using the trained restricted oracle neural network.

For example, the system can generate the second training data by, for at least a subset of the training examples in the first training data, processing the ground truth output in the training example using the trained restricted oracle neural network to generate a training guiding code sequence and then using the training guiding code sequence as the ground truth for the training image in the training example.

The system can then train the sequence transduction neural network on the second training data to minimize an appropriate loss function, e.g., a next token prediction loss. During this training, the restricted oracle neural network is held fixed, i.e., the values of the parameters of the restricted oracle neural network are kept frozen to the trained values determined by training the restricted oracle neural network jointly with the base computer vision neural network.

The system can perform the training iteratively on batches of the second training data by making use of an appropriate optimizer, e.g., the Adam optimizer, the rmsProp optimizer, the Adafactor optimizer, or a different machine learning optimizer, to map gradients of the loss function to updates to the values of the parameters of the sequence transduction neural network.

For example, the loss function can be the average of, for each training example, a combination of, e.g., a sum or a weighted sum of, the log likelihoods for the training output sequence in the training example. When the target output sequence does include noisy bounding boxes, the sets of first tokens for the random bounding boxes are not included in the combination.

In some cases, during the training, because the sequence transduction neural network does not have access to the ground truth output and needs to recover the guiding code (that was generated from the ground truth output) from only the input image, the sequence transduction neural network may not be able to reliably exactly reproduce the training guiding codes even after the training completes.

To account for this, the system can modify the training of the base computer vision neural network and the restricted oracle neural network to prevent the base computer vision neural network from becoming overly reliant on the guiding code sequences. For example, the system can, prior to providing a given training guiding code sequence as input to the computer vision neural network during the training, randomly mask out one or more of the vectors in the given training guiding code sequence. For example, the system can randomly select, for each training example in a batch, an integer k from 0 to n, where n is the code length. Then, the system can mask out a random subset of k vectors before inputting the guiding code sequence to the base network. For example, masked out vectors can be replaced with a vector of all zeroes or of all randomly selected values.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, e.g., inference, workloads.

Machine learning models can be implemented and deployed using a machine learning framework, .e.g., a TensorFlow framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by one or more computers, the method comprising:
obtaining (202) an input image (102) for a computer vision task;
processing (204) the input image through a sequence transduction neural network (110) that is configured to process the input image to generate a guiding code sequence (104) that includes a fixed number of vectors, wherein the guiding code sequence is a prediction of a sequence that would be generated by a restricted oracle neural network by processing a ground truth label for the computer vision task for the input image; and
providing (206) the guiding code sequence as input to a base computer vision neural network (120) that is configured to process the guiding code sequence and the input image to generate a network output (150) for the computer vision task.

2. The method of claim 1, wherein each vector in the guiding code sequence (104) is selected from a discrete vocabulary of vectors.

3. The method of any preceding claim, wherein the sequence transduction neural network (110) comprises:
an encoder neural network configured to process the input image (102) to generate an encoded representation of the input image, and
an auto-regressive decoder neural network configured to auto-regressively generate an output sequence that specifies the guiding code sequence conditioned on the encoded representation of the input image.

4. The method of claim 3, wherein:
the encoder neural network is a Vision Transformer backbone neural network; and
the auto-regressive decoder neural network is an auto-regressive Transformer decoder.

5. The method of any preceding claim, wherein the base computer vision neural network (120) is a feedforward neural network.

6. The method of claim 5, wherein the base computer vision neural network (120) is a Vision Transformer.

7. The method of any preceding claim, wherein the network output (150) for the computer vision task is structured output that includes one or more predicted values for each of a plurality of pixels in the output image.

8. The method of claim 7, wherein the computer vision task is one or more of: panoptic segmentation, instance segmentation, semantic segmentation, monocular depth estimation, surface normal estimation, image colorization, object detection, or image super-resolution.

9. A method of training the base computer vision neural network and the sequence transduction neural network of any preceding claim, comprising:
obtaining (402) a set of first training data for the computer vision task that comprises a plurality of training images and, for each training image, a ground truth output for the computer vision task;
training (404) the base computer vision neural network jointly with a restricted oracle neural network on the first training data, wherein the restricted oracle neural network is configured to process a ground truth output for the computer vision task to generate a training guiding code sequence for the corresponding training image, and wherein, during the training, the computer vision neural network receives as input (i) a training image and (ii) a training guiding code sequence for the training image generated by the restricted oracle neural network; and
after training the base computer vision neural network jointly with the restricted oracle neural network, training (406) the sequence transduction neural network on second training data that includes a plurality of training examples, each training example including:
(i) a training image, and
(ii) a ground truth guiding code sequence generated by processing a ground truth output for the computer vision task for the training image using the trained restricted oracle neural network.

10. The method of claim 9 when dependent on claim 2, wherein training the base computer vision neural network jointly with the restricted oracle neural network comprises:
learning the discrete vocabulary of vectors.

11. The method of claim 10, wherein the restricted oracle neural network is configured to map a ground truth output for the computer vision task to a sequence of encoded vectors, and generate the training guiding code sequence by mapping each encoded vector to a nearest vector in the discrete vocabulary of vectors.

12. The method of claim 11, further comprising, while training the base computer vision neural network jointly with the restricted oracle neural network:
detecting an unused vector in the discrete vocabulary and, in response:
identifying a most frequently used vector in the discrete vocabulary;
generating a new vector by applying noise to the most frequently used vector; and
replacing the unused vector with the new vector.

13. The method of any one of claims 9-12, further comprising, prior to providing a given training guiding code sequence as input to the computer vision neural network, randomly masking out one or more of the vectors in the given training guiding code sequence.

14. A system comprising:
one or more computers; and
one or more storage devices storing instructions that, when executed by the one or more computers, cause the one or more computers to perform the respective operations of any one of claims 1-13.

15. One or more computer-readable storage media storing instructions that when executed by one or more computers cause the one or more computers to perform the respective operations of the method of any one of claims 1-13.

## Patentansprüche

1. Verfahren, das von einem oder mehreren Computern durchgeführt wird, wobei das Verfahren Folgendes umfasst:
Erhalten (202) eines Eingabebilds (102) für eine Computervision-Aufgabe;
Verarbeiten (204) des Eingabebilds durch ein neuronales Sequenztransduktionsnetzwerk (110), das konfiguriert ist, das Eingabebild zu verarbeiten, um eine Führungscodesequenz (104) zu erzeugen, die eine feste Anzahl von Vektoren umfasst, wobei die Führungscodesequenz eine Vorhersage einer Sequenz ist, die von einem neuronalen eingeschränkten Orakelnetzwerk durch Verarbeiten eines Ground-Truth-Labels für die Computervision-Aufgabe für das Eingabebild erzeugt werden würde; und
Bereitstellen (206) der Führungscodesequenz als Eingabe für ein neuronales Basis-Computervision-Netzwerk (120), das konfiguriert ist, die Führungscodesequenz und das Eingabebild zu verarbeiten, um eine Netzwerkausgabe (150) für die Computervision-Aufgabe zu erzeugen.

2. Verfahren nach Anspruch 1, wobei jeder Vektor in der Führungscodesequenz (104) aus einem diskreten Vokabular von Vektoren ausgewählt ist.

3. Verfahren nach einem der vorhergehenden Ansprüche, wobei das neuronale Sequenztransduktionsnetzwerk (110) Folgendes umfasst:
ein neuronales Kodiernetzwerk, das konfiguriert ist, das Eingabebild (102) zu verarbeiten, um eine kodierte Darstellung des Eingabebilds zu erzeugen, und
ein autoregressives neuronales Dekodernetzwerk, das konfiguriert ist, autoregressiv eine Ausgabesequenz zu erzeugen,
die die Führungscodesequenz bedingt auf der kodierten Darstellung des Eingabebilds spezifiziert.

4. Verfahren nach Anspruch 3, wobei:
das neuronale Kodiernetzwerk ein neuronales Vision-Transformer-Backbone-Netzwerk ist; und
das autoregressive neuronale Dekodernetzwerk ein autoregressiver Transformer-Dekoder ist.

5. Verfahren nach einem der vorhergehenden Ansprüche, wobei das neuronale Basis-Computervision-Netzwerk (120) ein vorwärtsgekoppeltes neuronales Netzwerk ist.

6. Verfahren nach Anspruch 5, wobei das neuronale Basis-Computervision-Netzwerk (120) ein Vision Transformer ist.

7. Verfahren nach einem der vorhergehenden Ansprüche, wobei die Netzwerkausgabe (150) für die Computervision-Aufgabe eine strukturierte Ausgabe ist, die einen oder mehrere vorhergesagte Werte für jeden einer Vielzahl von Pixeln im Ausgabebild umfasst.

8. Verfahren nach Anspruch 7, wobei die Computervision-Aufgabe eines oder mehrere von Folgendem ist: panoptische Segmentierung, Instanzsegmentierung, semantische Segmentierung, monokulare Tiefenschätzung, Oberflächennormalenschätzung, Bildkolorisierung, Objektdetektion oder Bild-Superauflösung.

9. Verfahren zum Trainieren des neuronalen Basis-Computervision-Netzwerks und des neuronalen Sequenztransduktionsnetzwerks nach einem der vorhergehenden Ansprüche, umfassend:
Erhalten (402) eines Satzes erster Trainingsdaten für die Computervision-Aufgabe, der eine Vielzahl von Trainingsbildern umfasst und, für jedes Trainingsbild, eine Ground-Truth-Ausgabe für die Computervision-Aufgabe;
Trainieren (404) des neuronalen Basis-Computervision-Netzwerks gemeinsam mit einem neuronalen eingeschränkten Orakelnetzwerk auf den ersten Trainingsdaten, wobei das neuronale eingeschränkte Orakelnetzwerk konfiguriert ist, eine Ground-Truth-Ausgabe für die Computervision-Aufgabe zu verarbeiten, um eine Trainings-Führungscodesequenz für das entsprechende Trainingsbild zu erzeugen, und wobei das neuronale Computervision-Netzwerk während des Trainings als Eingabe (i) ein Trainingsbild und (ii) eine Trainings-Führungscodesequenz für das Trainingsbild, die vom neuronalen eingeschränkten Orakelnetzwerk erzeugt wurde, empfängt; und
nach dem gemeinsamen Trainieren des neuronalen Basis-Computervision-Netzwerks mit dem neuronalen eingeschränkten Orakelnetzwerk, Trainieren (406) des neuronalen Sequenztransduktionsnetzwerks auf zweiten Trainingsdaten, die eine Vielzahl von Trainingsbeispielen umfassen, wobei jedes Trainingsbeispiel umfasst:
(i) ein Trainingsbild, und
(ii) eine Ground-Truth-Führungscodesequenz, die durch Verarbeiten einer Ground-Truth-Ausgabe für die Computervision-Aufgabe für das Trainingsbild unter Verwendung des trainierten neuronalen eingeschränkten Orakelnetzwerks erzeugt wurde.

10. Verfahren nach Anspruch 9, wenn abhängig von Anspruch 2, wobei das gemeinsame Trainieren des neuronalen Basis-Computervision-Netzwerks mit dem neuronalen eingeschränkten Orakelnetzwerk Folgendes umfasst:
Erlernen des diskreten Vokabulars von Vektoren.

11. Verfahren nach Anspruch 10, wobei das neuronale eingeschränkte Orakelnetzwerk konfiguriert ist, eine Ground-Truth-Ausgabe für die Computervision-Aufgabe auf eine Sequenz kodierter Vektoren abzubilden und die Trainings-Führungscodesequenz zu erzeugen, indem jeder kodierte Vektor auf einen nächstgelegenen Vektor im diskreten Vokabular von Vektoren abgebildet wird.

12. Verfahren nach Anspruch 11, ferner umfassend, während des gemeinsamen Trainierens des neuronalen Basis-Computervision-Netzwerks mit dem neuronalen eingeschränkten Orakelnetzwerk:
Detektieren eines ungenutzten Vektors im diskreten Vokabular und, als Reaktion auf Folgendes:
Identifizieren eines am häufigsten verwendeten Vektors im diskreten Vokabular;
Erzeugen eines neuen Vektors durch Anwenden von Rauschen auf den am häufigsten verwendeten Vektor; und
Ersetzen des ungenutzten Vektors durch den neuen Vektor.

13. Verfahren nach einem der Ansprüche 9-12, ferner umfassend, vor dem Bereitstellen einer gegebenen Trainings-Führungscodesequenz als Eingabe für das neuronale Computervision-Netzwerk, zufälliges Maskieren eines oder mehrerer der Vektoren in der gegebenen Trainings-Führungscodesequenz.

14. System, umfassend:
einen oder mehrere Computer; und
eine oder mehrere Speichervorrichtungen, die Anweisungen speichern, die, wenn sie von dem einen oder den mehreren Computern ausgeführt werden, den einen oder die mehreren Computer veranlassen, die jeweiligen Operationen nach einem der Ansprüche 1-13 durchzuführen.

15. Ein oder mehrere computerlesbare Speichermedien, die Anweisungen speichern, die, wenn sie von einem oder mehreren Computern ausgeführt werden, den einen oder die mehreren Computer veranlassen, die jeweiligen Operationen des Verfahrens nach einem der Ansprüche 1-13 durchzuführen.

## Revendications

1. Procédé réalisé par un ou plusieurs ordinateurs, le procédé comprenant :
l'obtention (202) d'une image d'entrée (102) pour une tâche de vision par ordinateur ;
le traitement (204) de l'image d'entrée à travers un réseau neuronal de transduction de séquence (110) configuré pour traiter l'image d'entrée afin de générer une séquence de code guide (104) qui comporte un nombre fixe de vecteurs, dans lequel la séquence de code guide est une prédiction d'une séquence qui serait générée par un réseau neuronal oracle restreint en traitant une étiquette de vérité terrain pour la tâche de vision par ordinateur de l'image d'entrée ; et
la fourniture (206) de la séquence de code guide comme entrée d'un réseau neuronal de vision par ordinateur de base (120) qui est configuré pour traiter la séquence de code guide et l'image d'entrée afin de générer une sortie de réseau (150) pour la tâche de vision par ordinateur.

2. Procédé selon la revendication 1, dans lequel chaque vecteur de la séquence de code guide (104) est sélectionné à partir d'un vocabulaire discret de vecteurs.

3. Procédé selon une quelconque revendication précédente, dans lequel le réseau neuronal de transduction de séquence (110) comprend :
un réseau neuronal d'encodeur configuré pour traiter l'image d'entrée (102) afin de générer une représentation encodée de l'image d'entrée, et
un réseau neuronal de décodeur autorégressif configuré pour générer de manière autorégressive une séquence de sortie qui spécifie la séquence de code guide conditionnée par la représentation encodée de l'image d'entrée.

4. Procédé selon la revendication 3, dans lequel :
le réseau neuronal d'encodeur est un réseau neuronal de base de type Vision Transformer ; et
le réseau neuronal de décodeur autorégressif est un décodeur Transformer autorégressif.

5. Procédé selon une quelconque revendication précédente, dans lequel le réseau neuronal de vision par ordinateur de base (120) est un réseau neuronal à propagation directe.

6. Procédé selon la revendication 5, dans lequel le réseau neuronal de vision par ordinateur de base (120) est un réseau de type Vision Transformer.

7. Procédé selon une quelconque revendication précédente, dans lequel la sortie de réseau (150) pour la tâche de vision par ordinateur est une sortie structurée qui comporte une ou plusieurs valeurs prédites pour chacun d'une pluralité de pixels dans l'image de sortie.

8. Procédé selon la revendication 7, dans lequel la tâche de vision par ordinateur est l'une ou plusieurs parmi : une segmentation panoptique, une segmentation d'instance, une segmentation sémantique, une estimation de profondeur monoculaire, une estimation de normale de surface, une colorisation d'image, une détection d'objet ou une super-résolution d'image.

9. Procédé d'entraînement du réseau neuronal de vision par ordinateur de base et du réseau neuronal de transduction de séquence selon une quelconque revendication précédente, comprenant :
l'obtention (402) d'un ensemble de premières données d'entraînement pour la tâche de vision par ordinateur qui comprend une pluralité d'images d'entraînement et, pour chaque image d'entraînement, une sortie de vérité terrain pour la tâche de vision par ordinateur ;
l'entraînement (404) du réseau neuronal de vision par ordinateur de base conjointement avec un réseau neuronal oracle restreint sur les premières données d'entraînement, dans lequel le réseau neuronal oracle restreint est configuré pour traiter une sortie de vérité terrain pour la tâche de vision par ordinateur afin de générer une séquence de code guide d'entraînement pour l'image d'entraînement correspondante, et
dans lequel, pendant l'entraînement, le réseau neuronal de vision par ordinateur reçoit en entrée (i) une image d'entraînement et (ii) une séquence de code guide d'entraînement pour l'image d'entraînement générée par le réseau neuronal oracle restreint ; et
après l'entraînement du réseau neuronal de vision par ordinateur de base conjointement avec le réseau neuronal oracle restreint, l'entraînement (406) du réseau neuronal de transduction de séquence sur des secondes données d'entraînement qui comportent une pluralité d'exemples d'entraînement, chaque exemple d'entraînement comportant :
(i) une image d'entraînement, et
(ii) une séquence de code guide de vérité terrain générée par le traitement d'une sortie de vérité terrain pour la tâche de vision par ordinateur pour l'image d'entraînement à l'aide du réseau neuronal oracle restreint entraîné.

10. Procédé selon la revendication 9, lorsqu'il dépend de la revendication 2, dans lequel l'entraînement du réseau neuronal de vision par ordinateur de base conjointement avec le réseau neuronal oracle restreint comprend :
l'apprentissage du vocabulaire discret de vecteurs.

11. Procédé selon la revendication 10, dans lequel le réseau neuronal oracle restreint est configuré pour cartographier une sortie de vérité terrain pour la tâche de vision par ordinateur à une séquence de vecteurs encodés, et générer la séquence de code guide d'entraînement en cartographiant chaque vecteur encodé à un vecteur le plus proche dans le vocabulaire discret de vecteurs.

12. Procédé selon la revendication 11, comprenant en outre, lors de l'entraînement du réseau neuronal de vision par ordinateur de base conjointement avec le réseau neuronal oracle restreint :
la détection d'un vecteur inutilisé dans le vocabulaire discret et, en réponse :
l'identification d'un vecteur le plus fréquemment utilisé dans le vocabulaire discret ;
la génération d'un nouveau vecteur en appliquant du bruit au vecteur le plus fréquemment utilisé ; et
le remplacement du vecteur inutilisé par le nouveau vecteur.

13. Procédé selon l'une quelconque des revendications 9 à 12, comprenant en outre, avant la fourniture d'une séquence de code guide d'entraînement donnée comme entrée au réseau neuronal de vision par ordinateur, le masquage aléatoire d'un ou de plusieurs des vecteurs de la séquence de code guide d'entraînement donnée.

14. Système comprenant :
un ou plusieurs ordinateurs ; et
un ou plusieurs dispositifs de stockage stockant des instructions qui, lorsqu'elles sont exécutées par les un ou plusieurs ordinateurs, amènent les un ou plusieurs ordinateurs à réaliser les opérations respectives selon l'une quelconque des revendications 1 à 13.

15. Un ou plusieurs supports de stockage lisibles par ordinateur stockant des instructions qui, lorsqu'elles sont exécutées par un ou plusieurs ordinateurs, amènent les un ou plusieurs ordinateurs à réaliser les opérations respectives du procédé selon l'une quelconque des revendications 1 à 13.
